# EUROPÄISCHE PATENTANMELDUNG

(11) **EP 0 680 128 A1**
(43) Veröffentlichungstag der Anmeldung: **02.11.1995**
(21) Anmeldenummer: 95106142.3
(22) Anmeldetag: 24.04.1995
(51) Int. Cl.: H02G 15/04

(54) **Aufrollbare Kabelendmuffe**

(30) Priorität: 25.04.1994 DE 4414355
(71) Anmelder: PAUL JORDAN ELEKTROTECHNISCHE FABRIK, GmbH & Co., D-12249 Berlin (DE)
(72) Erfinder: Seidel, René, D-12359 Berlin (DE); Kunzmann, Jens-Peter, D-13088 Berlin (DE)
(74) Vertreter: Alber, Norbert

(57) **Zusammenfassung**

Frei endende Elektrokabel müssen vor dem Anschluß ans Netz kurzschlußsicher und spannungsfest an ihrem Ende verschlossen werden.

Da die bekannten Kabelendmuffen hierfür umständlich in der Handhabung und teuer sind, wird erfindungsgemäß vorgeschlagen, sowohl für die einzelnen Adern als auch anschließend für das gesamte Kabel aus elastischem Material wie etwa Kautschuk bestehende, umstülpbare und auf die Ader bzw. das Kabel aufrollbare Endkappen zu verwenden, die aufgrund der Eigenspannung des Materials eine ausreichende Abdichtung gegen eindringendes Wasser bieten. Zusätzlich wird als erstes bei den einzelnen Adern eine Gratschutzkappe aus hartem Material aufgebracht, sowie im Bereich der freien Enden der aufrollbaren Endkappen vorher ein Dichtungsband auf den Außenumfang der Adern bzw. des Kabels aufgebracht.

## Beschreibung

Beim Verlegen eines oder mehrerer Elektro-Kabel, insbesondere von Erdkabeln, taucht das Problem auf, daß dieses Kabel frei im Erdreich endend verlegt werden soll, zur späteren Verlängerung, aber dennoch zwischenzeitlich ans Netz gehen soll.

Ein typischer Fall hierfür ist das Verlegen von Erdkabeln für Hausanschlüsse oder Straßenbeleuchtung in noch nicht abgeschlossenen Neubaugebieten.

In all diesen Fällen muß das stromführende freie Ende des Kabels mit einer Endmuffe oder einer adäquaten Vorrichtung wasserdicht, kurzschlußsicher und spannungsfest abgedeckt, also in der Regel abgedichtet, werden. Die Wasserdichtigkeit muß dabei nicht nur gegen das Eindringen von Wasser am Ende des Kabels von außen her gegeben sein, sondern bei Erd-Kabeln besteht auch immer die Gefahr des sog. Längswassers, also von Feuchtigkeit, die innerhalb des Kabelmantels zwischen den einzelnen, jeweils gesondert isolierten, Adern des Kabels über weite Kabelstrecken vordringt.

An Kabelendmuffen sind beispielsweise Bauformen bekannt, bei denen die einzelnen blanken Ader-Enden, um einen Kurzschluß zu verhindern, auf ausreichenden Abstand gebracht werden, und anschließend im Inneren eines umschließenden Kunststoffgehäuses mit wasserdichter und spannungsfester Vergußmasse eingegossen werden.

Da derartige Bauweisen sowohl von der Gestaltung der Vorrichtung als auch vom Montageaufwand relativ teuer und aufwendig sind und darüber hinaus die Vergußmassen vor allem bei der Verarbeitung schädliche Auswirkungen haben können, wird nach anderen Lösungen gesucht.

So ist aus dem Deutschen Gebrauchsmuster G 9011333 ein "Abnehmbarer Endverschluß für elektrische Leitungskabel" bekannt, wobei der Endverschluß aus einer Kappe besteht, welche über das abgeschnittene Kabelende gestülpt wird.

Zu diesm Zweck ist diese Kappe im mittleren Bereich so elastisch, daß sie teilweise umgestülpt werden kann, so daß ein Einschieben des Kabels nur noch in den Endbereich notwendig ist.

In diesem Endbereich, der nicht umgestülpt wird, kann man daher Querstege oder ähnliches zwischen den Wandungen und verbunden mit dem Boden der Kappe anordnen, die ein mechanisches Beschädigen durch die oftmals sehr scharfen Grate der abgesägten oder abgezwickten Kabelenden, welche Durchmesser von mehreren Millimetern haben können, verhindern sollen.

Diese Kabelendkappe dient jedoch lediglich dem Schutz des freien Endes eines nicht stromführenden Kabels, und bietet vor allem Schutz vor Schmutzeinwirkung etc. auf das freie Kabelende bei dessen Verlegung und anderen Arbeiten.

Für das kurzschlußsichere und spannungsfeste Abschließen insbesondere von mehradrigen Erdkabeln ist diese Kappe nicht geeignet, da einerseits keine Maßnahmen zum Sichern der einzelnen Adern gegeneinander getroffen sind und andererseits auch die Dichtwirkung des offenen Endes der Kabelendkappe am umschlossenen Kabelmantel nicht ausreichend ist.

Es ist daher die Aufgabe gemäß der Erfindung, einen Kabelendverschluß zu schaffen, mit dem stromführende Elektrokabel, insbesondere mehradrige Elektrokabel, nicht nur wasserdicht, sondern auch kurzschlußsicher und spannungsfest und gegen grobe mechanische Beanspruchung ausreichend geschützt abgedeckt werden.

Diese Aufgabe wird durch die kennzeichnenden Merkmale der Ansprüche 1, 2 und 6 gelöst. Vorteilhafte Ausführungsformen ergeben sich aus den Unteransprüchen.

Als erster Schritt muß eine mechanische Beschädigung des gesamten Verschlußes durch die sehr harten und scharfen Grate an den einzelnen Adern des abgelängten Kabels vermieden werden. Die Integration dieser Funktion, die ein relativ verschleißfestes und hartes Material voraussetzt, in eine andererseits elastische und umstülpbare Endkappe zu einem einstückigen Produkt ergibt eine eingeschränkte Handhabung und eine eingeschränkte Sicherheit gegen mechanische Beschädigung.

Deshalb wird gemäß der vorliegenden Erfindung zunächst auf die einzelnen Adern - und zwar ohne diese abisolieren zu müssen - jeweils eine harte, der Beschädigung durch Grat vorbeugende, Gratschutzkappe aufgeschoben, nachdem der Mantel des Kabels entfernt und die einzelnen Adern zur besseren Handhabung ausreichend auseinandergebogen wurden. Bei einadrigen Kabeln wird auch der Kabelmantel nicht entfernt, sondern die Gratschutzkappe direkt über den Kabelmantel geschoben.

Zur Erleichterung des Aufschiebens kann die Gratschutzkappe vor dem Aufschieben mit einem Gleitmittel auf den Innenflächen benetzt bzw. teilweise oder ganz angefüllt werden. Das dabei verwendete Gleitmittel kann zusätzlich auch eine wasserabstoßende Wirkung besitzen.

Anschließend wird bei mehradrigen Kabeln auf die Aderisolierung im Bereich hinter der Gratschutzkappe ein Dichtungsmaterial aufgebracht, insbesondere eine Butyldichtung in Form eines elastischen Dichtungsbandes, welches ein bis drei Mal um die Aderisolierung gewickelt wird.

Dieses Dichtungsband wird zwar hinter der Gratschutzkappe aufgebracht, jedoch nahe genug an der Gratschutzkappe, daß die anschließend aufgerollte Aderendkappe das Dichtungsband überdeckt.

Die Aderendkappe selbst besteht aus elastischem Material wie Kautschuk oder geeigneten Kunststoff und kann vollständig umgestülpt werden, so daß die Wände bereits unmittelbar ab dem Boden der Kappe gegenüber dem Normalzustand in die axial entgegengerichtete Richtung weisen.

In diesem Zustand wird die Aderendkappe mit ihrem Boden an die freie Stirnfläche der jeweiligen Ader angesetzt und anschließend die elastische Aderendkappe in die Normalstellung gestülpt. Dabei wird der Wandbereich der Aderendkappe in axialer Richtung, beginnend an der freien Stirnfläche, auf die Aderisolierung aufgerollt.

Ein Aufschieben der Aderendkappe ist damit in keiner Phase notwendig. Dennoch kann auch das Aufrollen wiederum mit Hilfe eines Gleitmittels erleichtert werden, welches wiederum unter Umständen auch eine zusätzliche wasserabstoßende Wirkung haben kann. Das Gleitmittel wird auf die im umgestülpten Zustand von der Ader abgewandten Seite, also dem Innenumfang im umgestülpten Zustand, aufgebracht, da diese Fläche beim Aufrollen knickt und entlang sich selbst verschoben werden muß.

Um ein Umbiegen der Aderendkappe von der Normalstellung in die umgestülpte Stellung an der richtigen Stelle zu bewirken, nämlich direkt am Übergang zwischen dem Boden und den wesentlich zylindrischen Wänden, ist im Normalzustand im Inneren der Aderendkappe am Übergang zwischen dem Boden zu den Wänden eine ringförmig umlaufende Nut eingearbeitet, die sich in axialer Richtung in den Außenbereich des Bodens hinein erstreckt.

Dadurch wird an dieser Stelle eine Materialstärke erzielt, die nicht größer, sondern im Regelfall geringer ist als die Materialstärke in den übrigen Wandbereichen. Wenn zusätzlich der Boden eine größere Dicke besitzt oder aus einem weniger flexiblen Material bzw. Materialmischung besteht, wird beim Umstülpen immer definiert an dieser Stelle des Übergangs zwischen Boden und Wänden das Umknicken in die andere Richtung erfolgen.

Die Abdichtung der einzelnen Adern erfolgt dadurch, daß vor allem die Wände im Anfangsbereich, also der Öffnung benachbart, wenigstens eine ringförmig umlaufende Rippe aufweisen, die im Normalzustand über den Innenumfang der Aderendkappe nach Innen vorsteht.

Da sich das Dichtungsband in einer solchen axialen Position befindet, daß diese ringförmigen Rippen im Bereich des Dichtungsbandes liegen, ergibt sich hierdurch eine besonders gute Abdichtung gegen Feuchtigkeit, da jede dieser Rippen als Labyrinthdichtung dient, ganz abgesehen von der guten Verbindung eines Butyl-Dichtungsbandes sowohl mit der Aderisolierung einerseits als auch mit dem Material der Aderendkappe andererseits.

Ein ausreichender, radial nach innen gerichteter Druck wird durch die Eigenelastizität des verwendeten Materials der Aderendkappe erzeugt. Zu diesem Zweck ist der Innendurchmesser der Aderendkappe im Normalzustand maximal so groß, in der Regel jedoch kleiner, als der Außendurchmesser der Aderisolierung.

Da das Dichtungsband eine zusätzliche Durchmesservergrößerung der Aderisolierung bewirkt, liegt die Aderendmuffe unter Druck sowohl am Dichtungsband an als auch an der Gratschutzkappe, die ebenfalls den Durchmesser der Aderisolierung vergrößert.

Dadurch sind nunmehr die einzelnen Adern sowohl gegeneinander als auch gegen Längswasser kurzschlußsicher und spannungsfest abgedichtet. Anschließend werden die derart isolierten Adern wieder so weit wie möglich in die Ausgangslage zurückgebogen, also in gegenseitige Anlage, um den Außendurchmesser des Gesamtkabels gering zu halten.

Weiterhin wird nun der Kabelmantel in seinem Endbereich mit einem Dichtungsband, wiederum vorzugsweise einer Butyldichtung, also einem weichen, elastisch bleibenden und gut abdichtenden Material, umwickelt und zwar in einer solchen axialen Position, daß die anschließend aufgebrachte Kabelendkappe mit ihren ringförmigen, abdichtenden Rippen in das Dichtungsband drückt und vorzugsweise dennoch die Kabelendkappe über das Dichtungsband hinwegreicht, so daß dieses nach Aufbringen der Kabelendkappe von außen nicht sichtbar ist und nicht beschädigt oder durch Scheuern etc. herausgezogen werden kann.

Die Kabelendkappe ist ähnlich wie die Aderendkappe aus einem elastischem Material wie Kautschuk oder ähnlichem und von der Normallage aus vollständig umstülpbar, wobei das Umknicken wiederum direkt am Übergang zwischen dem Boden und den Wänden erfolgt. An dieser Stelle ist wiederum analog eine entsprechend axial ausgerichtete Ringnut eingearbeitet.

Um bei der Kabelendkappe zusätzlich im aufgebrachten Zustand vom Kabelende aus zum freien Ende der Muffe hin den radial nach innen wirkenden Anpreßdruck zu vergrößern, verringert sich im Normalzustand der Kabelendkappe der Innendurchmesser wenigstens über einen in axialer Richtung mittleren Bereich, dem Konusbereich, vom Boden in Richtung auf das freie Ende der Kabelendmuffe zu. Dies kann auch bei den Aderendkappen vorgesehen sein.

Vorzugsweise bleibt der Innendurchmesser im bodennahen Endbereich gleich und ebenso im offenen Anfangsbereich, so daß die Durchmesserverringerung nur in dem mittleren Konusbereich gegeben ist.

Dabei ist der größte Innendurchmesser im bodennahen Endbereich gegeben. Der Innendurchmesser ist in diesem Bereich etwa genau so groß, wie der Außenumfang des Kabels nach dem Abdichten der einzelnen Adern, also einschließlich der aufgebrachten Gratschutzkappen und Aderendkappen.

Dadurch geht das - im Prinzip wie bei den Aderendkappen vor sich gehende - Aufrollen der Kabelendkappe in diesem ersten Bereich mit relativ geringem Kraftaufwand vor sich, und es findet nach dem Aufrollen dieses ersten, bodennahen Endbereiches bereits eine ausreichende Haftung der Kabelendkappe auf dem Kabel statt, um deren axiales Abrutschen zu verhindern.

Im weiteren Verlauf des Aufrollens sind die aufzuwendenden Kräfte größer entsprechend dem abnehmenden Innendurchmesser der Kabelendkappe, wobei der Innendurchmesser im offenen Anfangsbereich, also am Ende des Aufrollvorganges im Normalzustand sogar geringer ist als der Außendurchmesser des Kabelmantels. Auch bei der Kabelendkappe kann das Aufschieben in analoger Weise durch ein aufgebrachtes Gleitmittel erleichtert werden.

Auf diese Art und Weise wird erreicht, daß sich die Kabelendkappe im wesentlichen entlang ihrer gesamten axialen Länge an den Außenumfang der Aderendkappen bzw. des Kabelmantels und des darauf aufgebrachten Dichtungsbandes unter Druck anlegt, entsprechend der Eigenelastizität des Materials der Kabelendkappe.

Je nach Materialzusammensetzung beträgt die Dicke der Aderendkappe in Wandbereichen etwa 5% bis 10% des Außendurchmessers der Aderendkappe im Normalzustand, vorzugsweise etwa 1,5 bis 3 mm.

Die Herstellung der Aderendkappe sowie Kabelendkappen erfolgt dabei vorzugsweise direkt in der umgestülpten Stellung, wodurch das Umknicken in den umgestülpten Zustand entweder maschinell oder von Hand erst unmittelbar vor dem Aufbringen der Kappen, eingespart wird, ohne daß die Flexibilität der Kappen oder andere Parameter darunter leiden.

Eine Ausführungsform gemäß der Erfindung ist im folgenden anhand der Figuren beispielhaft näher beschrieben. Es zeigen
- Figur 1:: eine teilgeschnittene Längsansicht des vollständig abgedeckten Kabels
- Figur 2:: die Kabelendkappe im Normalzustand und im umgestülpten Zustand
- Figur 3:: die Aderendkappe im Normalzustand und im umgestülpten Zustand und
- Figur 4:: das Aufbringen der Einzelteile auf das Kabelende.

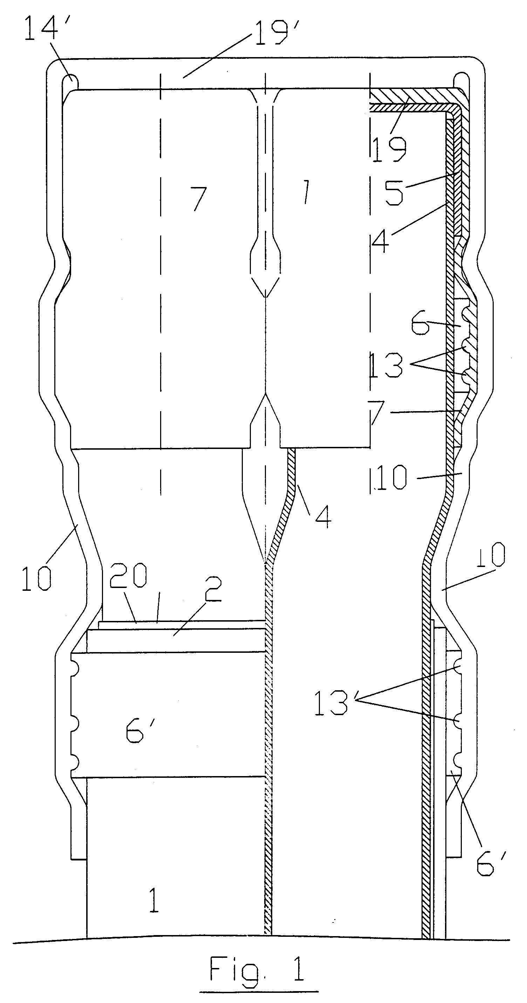

Figur 1 zeigt den erfindungsgemäßen Kabelendverschluß in der vollständig aufgebrachten Form.

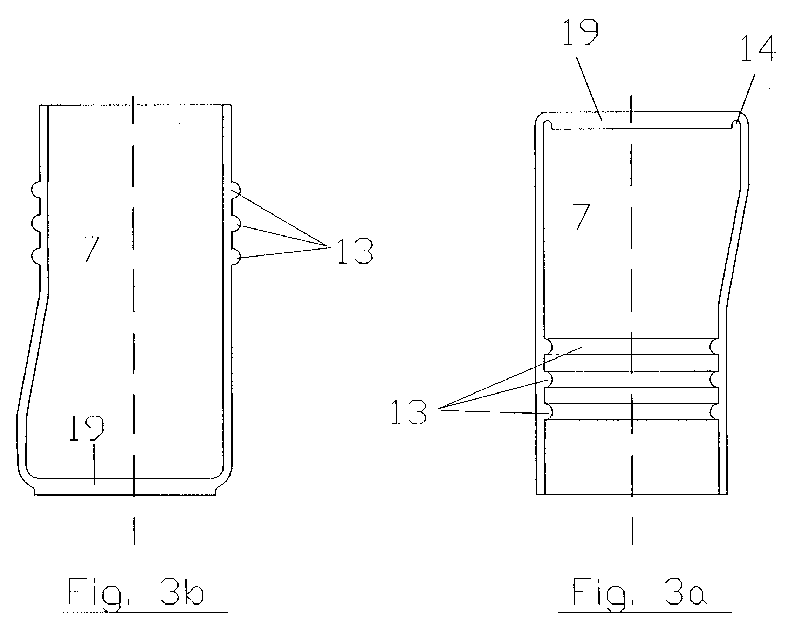

Durch Vergleich mit den in den Figuren 2a und 3a dargestellten Normalstellungen im unbelasteten, entspannten Zustand, sowie den auf das Kabel aufgebrachten Stellungen (Fig. 1) sind daraus die Dehnungen und damit aufgrund der in etwa gleich bleibenden Wandstärke über die jeweilige axiale Länge der Aderendkappen und Kabelendkappen die Kraftverläufe der radial nach innen gerichteten Anpreßkräfte aufgrund der Materialelastizität abschätzbar.

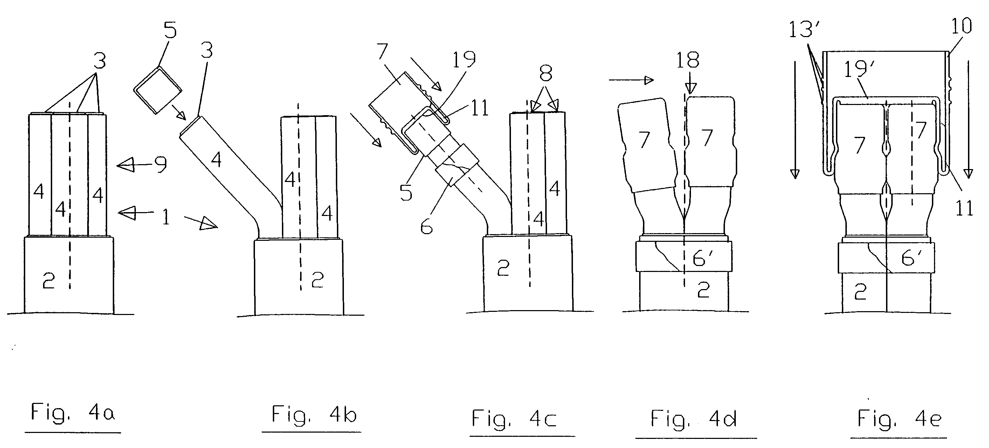

Die Vorgehensweise ist dabei anhand der Figuren 4 ersichtlich:

Figur 4a zeigt das Kabel 1 nach dem Entfernen des Kabelmantels 2 im Endbereich 9, sowie die aus deren Aderisolierungen 4 meist aufgrund des Ablängens noch etwas vorstehenden Adern 3.

Wie in Figur 4b dargestellt, werden zur weiteren Handhabung der einzelnen Adern 3 diese kegelstumpfförmig auseinandergebogen, und an jeder Ader die in den Figuren 4b bis 4e dargestellten Arbeitsschritte vollzogen:
Zunächst wird die Gratschutzkappe 5 axial auf das freie Ende der nicht abisolierten Ader 3 aufgeschoben.

Dies kann durch Benetzen des Inneren der Gratschutzkappe 5 bzw. teilweises Anfüllen mit einem Gleitmittel 11 erleichtert werden, da jedoch die Gratschutzkappe 5 aus einem harten, relativ wenig verformbaren Material wie etwa einem härteren Kunststoff etc. besteht, der auch durch die scharfen Grate der Adern 3 nicht durchstochen oder zerschnitten werden darf, ist die auftretende Haftreibung meist so gering, daß auf das Gleitmittel verzichtet wird.

Im Bereich hinter der Gratschutzkappe 5, jedoch noch im Axialbereich der anschließend aufzubringenden Aderendkappe 7, wird die Aderisolierung 4 mit einem Dichtungsband 6, beispielsweise aus Butyl bestehend, umwickelt, wobei selbstverständlich die Aderisolierung außen sauber und trocken sein soll, um eine möglichst gute Haftung und Verbindung mit dem Dichtungsband zu gewährleisten.

Anschließend wird die Aderendkappe im umgestülpten Zustand mit ihrem Boden 19 an die Stirnfläche 8 der Ader bzw. der Gratschutzkappe angelegt und die Aderendkappe 7 aufgerollt, wie in Figur 4c dargestellt. Aufgrund der vollständigen Umstülpung der Kappe weisen dabei zu Beginn des Aufrollvorganges die Wände der Aderendkappe vom Boden aus in die von der Ader 3 wegweisende Richtung, so daß auch am Anfang der Aufbringbewegung kein Einschieben der Ader 3 in die Aderendkappe 7 notwendig ist.

Eine Relativverschiebung unter Überwindung der Reibung findet jedoch während des weiteren Aufrollens zwischen den bereits in der Normallage und den noch in der umgestülpten Lage befindlichen Teilen der innenliegenden Umfangsflächen der Aderendkappe 7 im teilweise aufgerollten Zustand statt, weswegen dort ein Gleitmittel 11 diese Relativverschiebung erleichtert.

Für die vorherige Positionierung des Dichtungsbandes 6 ist es wichtig, daß dieses in einem solchen axialen Bereich aufgebracht wird, daß die zum freien Ende der Aderendkappe hin vorhandenen ringförmigen Rippen 13, die im aufgebrachten Zustand nach innen weisen, in das Butyl-Dichtungsband 6 drücken, und die Aderendkappe 7 das Dichtungsband vorzugsweise vollständig überdeckt.

Wie anhand der Figuren 3a und 3b ersichtlich, ist die Aderendkappe 7 in ihrem Normalzustand, wie in Figur 3a, linke Hälfte, dargestellt, mit einem über die axiale Länge im wesentlichen gleichbleibenden Innendurchmesser 12 ausgestattet, der lediglich im Bereich der ringförmig umlaufenden Rippen 13, die nach innen vorspringen, verkleinert ist.Ein in der Nähe des Bodens 19 erweiterter Innenumfang, der sich erst zu den Rippen 13 hin konisch verjüngt.- wie in Figur 3a, rechte Hälfte, dargestellt - erleichtert den dagegen das Aufrollen am Anfang.

Im auf die Aderisolierung mit der Gratschutzkappe 5 aufgerollten Zustand der Figur 1 bzw. 4d ist die Aderendkappe 7 somit im wesentlichen über ihre gesamte axiale Länge im Durchmesser gedehnt, da bereits der Außendurchmesser der Gratschutzkappe und auch der Außendurchmesser des aufgebrachten Dichtungsbandes 6 größer sind als der Innendurchmesser der Aderendkappe 7.

Lediglich an ihrem offenen Ende, an dem die Aderendkappe 7 direkt auf dem Außenumfang der Aderisolierung 4 anliegt, kann dies im wesentlichen ein unbelasteter Zustand sein, in dem der Innendurchmesser der Aderendkappe 7 im Normalzustand maximal dem Außendurchmesser der Aderisolierung 4 entspricht.

Da die Aderendkappe 7 ebenso wie die Kabelendkappe 10 aus einem sehr elastischem und verformbaren Material besteht, können trotz des vorzugsweise runden Innen- und Außenquerschnittes dieser Kappen auch Kabel bzw. Adern mit unrundem Querschnitt - wie die etwa dreieckigen Querschnitte der einzelnen Adern bei einem vierpoligen Kabel - dicht verschlossen werden.

Anschließend werden (Fig. 4d) die einzeln isolierten Adern 3 wieder zur Mitte, also zur Längsachse des Kabels, soweit wie möglich zurückgebogen, bis die einzelnen Aderendkappen 7 aneinander anliegen.

Im Endbereich des noch vorhandenen Kabelmantels 2 wird nun wiederum ein Dichtungsband 6' ringförmig aufgewickelt, in welches anschließend die ringförmig umlaufenden und abdichtenden Rippen 13' der Kabelendkappe 10 hineindrücken sollen.

Diese wird anschließend wiederum im vollständig umgestülpten Zustand mit ihrem Boden 19' gegen die Stirnseite der Aderendkappe 7 gelegt und (Fig. 4e) auf das Kabel 1 aufgerollt.

Dabei stellen die in das Dichtungsband 6' von außen nach innen hineindrückenden, umlaufenden Rippen 13' Labyrinth-Dichtungen dar, die die insgesamte Abdichtung gegen von außen eindringende Feuchtigkeit zusätzlich verbessern.

Die Kabelendkappe 10 erstreckt sich dann im vollständig aufgerollten Zustand - wie in Fig. 1 ersichtlich - mit ihrem freien Ende über den Bereich des Dichtungsbandes 6' hinweg, so daß dieses nach außen hin nicht sichtbar ist, und somit weder unbeabsichtigt zerstört, noch durch Hängenbleiben oder Ähnliches herausgezogen werden kann.

Durch den radial nach innen gerichteten Anpreßdruck aufgrund der Eigenelastiztät des Materials der Kabelendkappe 10 wird - ebenso wie bei der Aderendkappe 7 - eine sehr innige Verbindung zwischen den Materialien der Endkappen, des Dichtungsbandes und der Isolierung der Ader bzw. des Kabels erreicht.

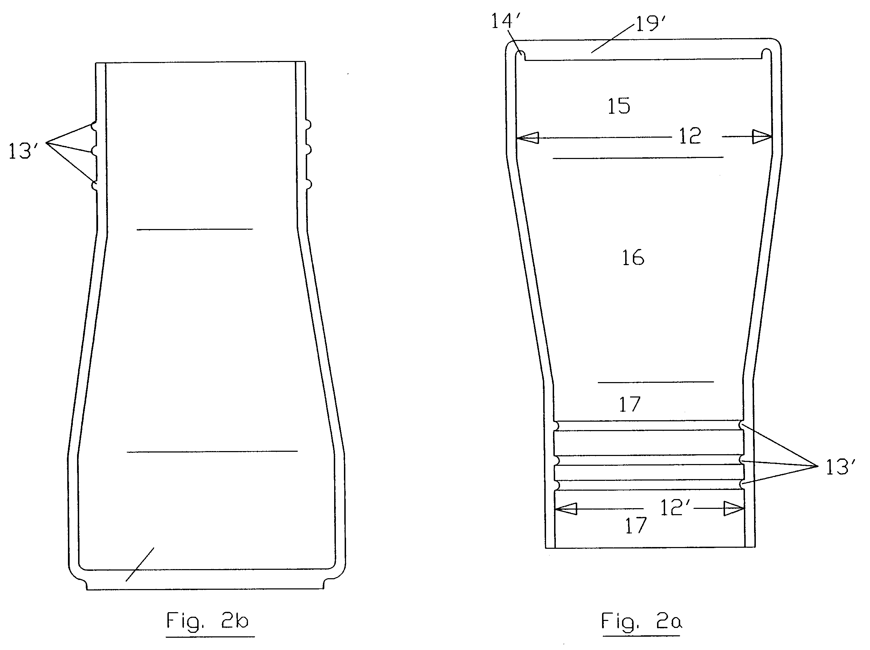

Wie besser anhand der Figuren 2a und 2b ersichtlich, ist auch bei der Kabelendkappe 10 - analog zur Aderendkappe 7 - im Normalzustand, wie er in Figur 2a dargestellt ist, am Übergangsbereich zwischen den Wänden der Kabelendkappe 10 und dem Boden 19' eine ringförmig umlaufende Nut 14 mit axialer Ausrichtung in den äußersten Randbereich des Bodens 19 eingearbeitet, so daß in diesem Bereich die verbleibende Wandstärke nicht größer ist als die normale Wandstärke der Endkappe.

Dadurch wird gegenüber der größeren Materialdicke des Bodens 19' erreicht, daß bei einem Umstülpen der Knickvorgang im Bereich dieser Nut 14' stattfindet, also in dem in Figur 2b dargestellten, umgestülpten Zustand die Wände sich bereits unmittelbar ab dem Boden 19' in die vom Kabel 1 abgewandte Richtung erstrecken.

Weiterhin zeigt der Vergleich zwischen den Figuren 2a und 2b, daß die Kabelendkappe 10 in ihrem axialen Verlauf in drei Bereiche untergliedert ist:
Im bodennahen Endbereich 15, der sich unmittelbar an den Boden 19' anschließt, weist die Kabelendkappe 10 einen gleichbleibenden Innendurchmesser 12 auf, der etwa dem Außendurchmesser des mit Gratschutzkappen und Aderendkappen ausgestatteten, vorher abgemantelten Ende des Kabels 1 entspricht. Dadurch ist beim Aufrollen dieses ersten Bereiches nur ein geringer Kraftaufwand notwendig.

Demgegenüber ist in der Nähe des freien Endes der Kabelendkappe 10 ein offener Anfangsbereich 17 mit ebenfalls gleichbleibendem Innendurchmesser 12' zu erkennen, der sich in diesem offenen Anfangsbereich 17 ebenfalls nicht verändert bis auf die nach innen vorspringenden, drei ringförmig umlaufenden Rippen 13'.

Zwischen dem bodennahen Endbereich 15 und dem offenen Anfangsbereich 17 ist ein Konusbereich 16 angeordnet, in welchem sich der Innendurchmesser 12' - im Normalzustand der Kabelendkappe 10 wie in Figur 2 a dargestellt - von der Seite des Bodens 19' aus zum offenen Ende und damit zum offenen Bereich 17 hin verringert. Beim Aufrollen dieses Bereiches wird somit eine stetig zunehmende Kraft zu überwinden sein, während eine gleichbleibend hohe Kraft beim Aufrollen des offenen Anfangsbereiches 17 zu überwinden ist. Diese ist notwendig, um die maximale radial nach innen gerichtete Anpreßkraft im Bereich des Dichtungsbandes 6' zu erreichen.

Auch die Wandstärken der Kabelendkappe 10 bzw. der Aderendkappe 7 sind im wesentlichen gleichbleibend und betragen 5% bis 15% des Außendurchmessers im Normalzustand, vorzugsweise 1,5 mm bis 4 mm.

## Patentansprüche

1. Verfahren zum wasserdichten, kurzschlußsicheren und spannungsfesten Abdecken des Endes eines Elektrokabels (1), insbesondere eines Erdkabels, mit folgenden Verfahrensschritten nacheinander
a) Aufschieben einer Gratschutzkappe (5') auf den Kabel-Mantel (2),
b) Umwickeln des Endbereiches des Kabel-Mantels (2) hinter der Gratschutzkappe (5') mit einem elastischen Dichtungsband (6'), insbesondere einer Butyldichtung,
c) Ansetzen einer umgestülpten, elastischen Kabelendkappe (10) an die Stirnfläche (18) des Kabels (1) und Aufrollen der Kabelendkappe (10) auf das Kabel, über das Dichtungsband (6') hinweg.

2. Verfahren zum wasserdichten, kurzschlußsicheren und spannungsfesten Abdecken des Endes eines mehradrigen Elektrokabels (1), insbesondere eines Erdkabels, mit folgenden Verfahrensschritten nacheinander
a) Entfernen des Kabel-Mantels (2) im Endbereich,
b) Auseinanderbiegen der einzelnen Adern (3),
c) bei jeder Ader (3)
- Aufschieben der Gratschutzkappe (5) auf die Ader-Isolierung (4),
- Umwickeln der Ader-Isolierung (4) hinter der Gratschutzkappe (5) mit einem elastischen Dichtungsband (6), insbesondere einer Butyldichtung,
- Ansetzen einer umgestülpten, elastischen, Aderendkappe (7) an die Stirnfläche (8) der Ader (3) und Aufrollen der Aderendkappe (7) auf die Ader über das Dichtungsband (6) hinweg,
d) Zusammenbiegen der Adern (3),
e) Umwickeln des Endbereiches (9) des Kabel-Mantels (2) mit einem elastischen Dichtungsband (6'), insbesondere einer Butyldichtung,
f) Ansetzen einer umgestülpten, elastischen, Kabelendkappe (10) an die Stirnfläche (18) des Kabels (1) und Aufrollen der Kabelendkappe (10) auf das Kabel (1) über das Dichtungsband (6') hinweg.

3. Verfahren nach einem der vorhergehenden Ansprüche,
**dadurch gekennzeichnet**, **daß**
die Aderendkappen (7) und/oder Kabelendkappen (10) beim Ansetzen an die entsprechende Stirnfläche sich in einem vollständig umgestülpen Zustand befinden.

4. Verfahren nach einem der vorhergehenden Ansprüche
**dadurch gekennzeichnet, daß**
die Aderendkappen (7) und/oder Kabelendkappen (10) beim Ansetzen an die entsprechende Stirnfläche (8) bzw. (18) auf der von der Ader (3) bzw. dem Kabel (1) abgewandten Innenumfangsfläche mit Gleitmittel (11) benetzt sind.

5. Bausatz zum wasserdichten, kurzschlußsicheren und spannungsfesten Abdecken des Endes eines Elektrokabels, insbesondere nach dem Verfahren eines der vorhergehenden Ansprüche, mit Gratschutzkappen (5), Aderendkappen (7), Kabelendkappen (10), Dichtungsband (6, 6'),
**dadurch gekennzeichnet, daß**
die Kabelendkappe (10) im Normalzustand
- zwischen dem bodennahen Endbereich (15) und dem offenen Anfangsbereich (17) einen Konusbereich (16) aufweist, in dem der Innendurchmesser (12') der Kabelendkappe (10) von der Bodenseite zur offenen Seite hin in axialer Richtung abnimmt,
- der Innendurchmesser (12') im bodennahen Endbereich (15) etwa dem Außendurchmesser der in Anlage zueinander gebrachten, mit Gratschutzkappen (5) und Aderendkappen (7) versehenen Enden der Adern (3) des Kabels (1) entspricht und
- der Innendurchmesser (12') im offenen Anfangsbereich (17) kleiner ist als der Außendurchmesser des Kabelmantels (2) des Kabels (1).

6. Bausatz nach Anspruch 5,
**dadurch gekennzeichnet, daß**
die Kabelendkappe (10) im Normalzustand im offenen Anfangsbereich (17) umlaufende, insbesondere ringförmig umlaufende vorspringende Rippen (13') aufweist.

7. Bausatz nach Anspruch 5 oder 6
**dadurch gekennzeichnet, daß**
am Übergang zwischen dem Boden (19') und dem bodennahen Endbereich (15) eine ringförmig umlaufende, im Normzustand axial in das Material des Bodens hinein gerichtete, Nut (14') angeordnet ist, so daß in diesem Bereich die verbleibende Wandstärke nicht größer ist als im Wandbereich.

8. Bausatz zum wasserdichten, kurzschlußsicheren und spannungsfesten Abdecken des Endes eines Elektrokabels, insbesondere nach dem Verfahren eines der vorhergehenden Ansprüche, mit Gratschutzkappen (5), Aderendkappen (7), Kabelendkappen (10), Dichtungsband (6, 6'),
**dadurch gekennzeichnet, daß**
die Aderendkappe (7) im Normalzustand einen im wesentlichen gleichbleibenden Innendurchmesser (12) aufweist und der Innendurchmesser (12) geringer ist als der Außendurchmesser einer mit Gratschutzkappe (5) und Dichtungsband (6) ausgestattete Ende einer Ader (3)
